# EUROPÄISCHE PATENTSCHRIFT

(11) **EP 1 119 866 B1**
(45) Veröffentlichungstag und Bekanntmachung des Hinweises auf die Patenterteilung: **03.07.2002**
(21) Anmeldenummer: 99944219.7
(22) Anmeldetag: 29.09.1999
(51) Int. Cl.: H01H 1/00

(54) **NEUE ELEKTRISCHE MIKROMECHANISCHE SCHALTEINRICHTUNG**
NEW ELECTRICAL SWITCHGEAR
NOUVEAU DISPOSITIF DE COMMUTATION ELECTRIQUE

(30) Priorität: 09.10.1998 DE 19846639
(43) Veröffentlichungstag der Anmeldung: 01.08.2001
(73) Patentinhaber: ABB RESEARCH LTD., 8050 Zürich (CH)
(72) Erfinder: STRUEMPLER, Ralf, CH-5412 Gebenstorf (CH)
(74) Vertreter: ABB Patent Attorneys
(86) Internationale Anmeldenummer: CH9900462
(87) Internationale Veröffentlichungsnummer: WO0022638

(56) Entgegenhaltungen:
- WO-A-97/18574
- DE-A- 4 421 980
- US-A- 5 374 792
- US-A- 5 430 597
- US-A- 5 454 904

## Beschreibung

Die Erfindung betrifft eine elektrische Schalteinrichtung nach dem Oberbegriff von Patentanspruch 1. Eine derartige Schalteinrichtung wird insbesondere im Bereich der Haushaltsstromversorgung, der Stromversorgung von mittleren Elektromotoren, im Bereich der Gebäudetechnik, bei Lichtanlagen sowie bei elektrischen Anlagen in Schienenfahrzeugen, Schiffen und dgl. angewendet. Für diesen Anwendungsbereich sind Spannungen zwischen 100 V und 1 kV und Lastströme zwischen 1 A und 75 A typisch.

Eine Schalteinrichtung der vorgenannten Art ist In US-A 5'430'597 beschrieben. Diese Schalteinrichtung enthält ein zwischen zwei Stromanschlüsse geschaltetes Schaltfeld. Das Schaltfeld weist auf einem Substrat angeordnet eine erste Anzahl von parallel geführten Strompfaden auf mit jeweils einer zweiten Anzahl von in Serie geschalteten Mikrorelaiszellen. Die Anzahl an Mikrorelaiszellen ist so bemessen, dass die in üblichen Niederspannungswechselstromnetzen auftretenden Ströme ausgeschaltet werden können. Beim Schalten eines grossen Strom ist jedoch nicht mit Sicherheit auszuschliessen, dass einzelne Mikrorelaiszelle überlastet werden.

Weitere Schalteinrichtungen mit Mikrorelaiszellen sind in DE-A 44 21 980, WO-A 97 18574, US-A 5'374'792 und US-A 5'454'904 beschrieben.

Der Erfindung liegt das technische Problem zugrunde, eine Schalteinrichtung mit guter Spannungs- und Strombelastbarkeit zu schaffen.

Bei der elektrischen Schalteinrichtung nach der Erfindung sind die Mikrorelaiszellen unter Bildung von spannungs- und stromteilend wirkenden Stufen miteinander elektrisch verbunden. Innerhalb einer Stufe sind die Mikrorelaiszellen vor dem Anschluß an die nächste Stufe elektrisch zusammengeführt. Hierdurch wird der abzuschaltende Strom innerhalb einer Stufe gleichmässig auf alle Mikrorelaiszellen der Stufe verteilt. Es wird so eine Überlastung einer oder mehrerer Mikrorelaiszellen einer Stufe vermieden und damit eine grosse Betriebssicherheit der Schalteinrichtung erreicht.

Weiterhin zeichnen sich die Mikrorelaiszellen durch außerordentlich kleine Schaltleistungen aus, die auch in der Vervielfachung der Schaltleistung durch das Schaltfeld zu einer im Verhältnis zu der Strom- und Spannungsauslegung der erfindungsgemäßen Schalteinrichtung sehr niedrigen Schaltleistung führen. Hierzu wird auf die Erläuterungen des Ausführungsbeispiels verwiesen.

Die Mikrorelaiszellen können durch die bekannte Verfahren der Mikrotechnik hergestellt werden, also insbesondere durch Verfahren, die ihre Ursprünge in der Halbleitertechnologie haben. Insoweit eignen sich Mikrorelaiszellen sehr zur Integration mit anderen halbleitertechnologischen Einrichtungen, insbesondere Transistoren und integrierten Schaltungen. Dementsprechend kann auch die erfindungsgemäße Schalteinrichtung insgesamt nicht nur für sich als Schaltfeld auf einem Chip integriert sein, sondern darüber hinaus auf dem gleichen Chip weitere elektrische Einrichtungen aufweisen. Diese Integrationsmöglichkeiten verstärken noch die bereits erwähnten Vorteile des niedrigen Gewichts und des günstigen Bauvolumens der Erfindung.

Schließlich kann die Erfindung auch in der Herstellung der Schalteinrichtung zu großen Vorteilen führen, nicht nur im Hinblick auf die bereits erwähnten Integrationsmöglichkeiten. Vor allem kann die erfindungsgemäße Schalteinrichtung mit einer feststehenden Standardtechnologie und einer unveränderten Standardmikrorelaiszelle in unterschiedlichen Größen des Schaltfeldes hergestellt werden, indem lediglich beispielsweise der Maskensatz des entsprechenden Prozesses, allgemeiner gesprochen die Layoutgeometrie, angepaßt wird. Dadurch kann in einer technologisch weitgehend einheitlichen Herstellungslinie eine sehr große Breite verschiedener elektrischer Spezifikationen abgedeckt werden. Hierdurch ergeben sich natürlich erhebliche Kostenvorteile.

Ein letzter Punkt, der hier aufgezählt werden soll, ist insbesondere für den von den eingangs beschriebenen Schützen abgedeckten Bereich der Überstromabschaltung interessant, nämlich die außerordentlich schnelle Ansprechzeit der Mikrorelaisschalter. Besonders interessant ist hierbei, daß die erfindungsgemäße Schalteinrichtung mit einem ganzen Schaltfeld solcher Mikrorelaiszellen im wesentlichem die gleiche Ansprechzeit aufweist wie die einzelne Zelle. Dieser Vorteil geht also aus der Technologie der einzelnen Mikrorelaiszelle ohne Skalierung unmittelbar in die gesamte Schalteinrichtung ein. Somit lassen sich im Vergleich zu konventionellen Schützen mit den durch die Trägheit der bewegten Massen erheblich beschränkteren Möglichkeiten außerordentlich schnell ansprechende Schutzschalteinrichtungen realisieren. Auch hier wird auf das im Folgenden noch beschriebene Ausführungsbeispiel verwiesen.

Bevorzugt sind bei der Erfindung elektrostatisch betätigte Mikrorelaiszellen, d. h. solche, bei denen das bewegliche Kontaktstück elektrostatisch betätigt wird. Hierzu wird auf das Ausführungsbeispiel verwiesen und auf ein von Siemens publiziertes Si-Mikrorelais (H. F. Schlaak, F. Arndt, J. Schimkat, M. Hanke, Proc. Micro System Technology 96, 1996, Seiten 463-468). Es wird weiterhin verwiesen auf R. Allen: "Simplified Process is Used to Make Micromachined FET-like Four-Terminal Microswitches and Microrelays" in Electronic Design, 8 July, 1996, Seite 31 sowie auf "Micromechanic Membrane Switches on Silicon" von K. E. Petersen, IBM J. RES. DEVELOP., Band 23, Nr. 4, Juli 1979, Seiten 376-385. Der Offenbarungsgehalt dieser und der im Folgenden zitierten Quellen ist in dieser Anmeldung mitinbegriffen.

In der Erfindung sind jedoch auch andere Mikrorelaiszellen inbegriffen, etwa elektromagnetisch betätigte, bei denen im allgemeinen planare Spiralspulen mit ferromagnetischen beweglichen Kontaktstücken verwendet werden. Möglich sind auch piezoelektrische Mikrorelais, die jedoch relativ hohe Ansteuerspannungen benötigen.

Hinsichtlich der bereits angesprochenen Integrationsmöglichkeiten der erfindungsgemäßen Mikrorelaisschaltung mit weiteren elektronischen Komponenten auf einem Chip kommt primär ein Stromsensor zum Überstromschutz in Betracht. Dieser Stromsensor überwacht den durch die Schalteinrichtung im leitenden Zustand fließenden Strom und löst ab einem bestimmten Stromschwellenwert den Öffnungsvorgang der Schalteinrichtung aus. In Frage kommt dabei insbesondere ein Hallsensor, der ebenfalls auf einem Chip, etwa einem Silizium- oder einem anderen Halbleiterchip integriert werden kann. Aber auch andere Substrate können zur Integration dienen. Zu einer möglichen Technologie für einen integrierten Hall-Stromsensor wird verwiesen auf "Cylindrical Hall Device" von H. Blanchard, L. Chiesi, R. Racz und R. S. Popovic, Proceedings IEDM 96, Seiten 541-544, IEEE 1996.

Eine technologisch einfache Lösung ist dabei, den Stromsensor außerhalb des Schaltfeldes selbst bzw. an dessen Rand anzuordnen, um das Schaltfeld möglichst kompakt und einheitlich gestalten zu können. Daher ist es bevorzugt, den Stromsensor vor der ersten oder hinter der letzten Stufe der Mikrorelaisschaltung vorzusehen.

Eine Kombination mit einem Stromsensor, insbesondere einem Hallsensor, ist jedoch auch unabhängig von einer integrierten Lösung erfindungsgemäß bevorzugt. Es kann sogar von Vorteil sein, auf eine vollständige Integration zu verzichten. Dann kann beispielsweise eine stärker standardisierte Schalteinrichtung mit einem Schaltfeld aus Mikrorelaiszellen in großen Stückzahlen produziert werden und je nach Anwendungsfall mit unterschiedlich ausgelegten Hallsensoren auf jeweilige Ansprechwerte festgelegt werden. Hier würde eine Integration mit einem spezifischen Hallsensor die Stückzahlen einer einheitlichen Produktion deutlich reduzieren.

Ähnliche Aussagen gelten auch für eine elektronische Ansprechüberwachungseinrichtung, die ebenfalls mit dem Schaltfeld auf einem Chip integriert sein kann oder als von dem Schaltfeld separates Teil der erfindungsgemäßen Schalteinrichtung kombiniert sein kann. Eine solche Ansprechüberwachungseinrichtung registriert das Ansprechen der elektrischen Schalteinrichtung, insbesondere wenn diese als Überstromschutzschalteinrichtung verwendet wird. Dadurch kann die Schalteinrichtung nach einem Ansprechen für eine gewisse Zeit gesperrt werden, bevor sie anderweitig wieder eingeschaltet werden kann. Ebenfalls ist es möglich, nach einem Ansprechen einen definierten Test vorzunehmen, bei dem die Schalteinrichtung kurz in den leitenden Zustand gesetzt wird, um zu prüfen, ob der Überstromzustand noch vorliegt und somit ein automatisches Wiedereinschalten nach einer vorübergehenden Stromspitze zu ermöglichen. Mit dieser Ansprechüberwachungseinrichtung kann ferner eine Einrichtung zum Ansteuern und Auswerten eines Stromsensors oder eine Schnittstelle zu einer äußeren Steuereinrichtung der erfindungsgemäßen Schalteinrichtung verknüpft sein.

Eine dritte Möglichkeit für eine Kombination mit einer Zusatzschaltung betrifft eine Zeitgeberschaltung, die beispielsweise die Verwendung der erfindungsgemäßen Schalteinrichtung als Zeitschaltautomat bei Beleuchtungsanwendungen (Treppenhäuser) erlaubt. Auch hier kann die Zeitgeberschaltung auf einem Chip oder einem Substrat mit integriert sein oder auch als separates Teil kombiniert werden, um eine größere Flexibilität bei hohen Produktionsstückzahlen zu erlauben.

Im Folgenden wird ein typisches Ausführungsbeispiel für die Erfindung anhand der Figuren illustriert. Die dabei offenbarten Merkmale können auch in anderen Kombinationen erfindungswesentliche sein.
Figur 1 zeigt ein schematisiertes Schaltungsdiagramm des Schaltfeldes der erfindungsgemäßen Schalteinrichtung, und
Figur 2 zeigt die Schalteinrichtung mit dem Schalffeld und, auf demselben Chip integriert, einem Hallsensor und eine Ansprechüberwachungseinrichtung.

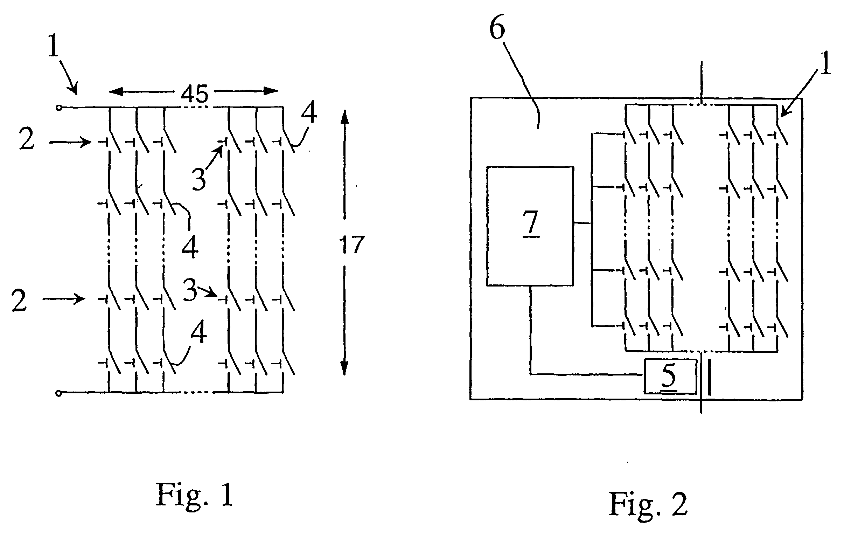

Figur 1 zeigt ein Schaltfeld 1 aus 17 seriell geschalteten Stufen 2 mit jeweils 45 parallel geschalteten Mikrorelaiszellen 3. Jede Mikrorelaiszelle 3 entspricht technologisch dem bereits erwähnten Siemens-Siliziummikrorelais und ist mit jeweils einer Mikrorelaiszelle 3 der vorhergehenden und einer der nachfolgenden Stufe 2 elektrisch verbunden. Bei der letzten und bei der ersten der Stufen 2 sind die Anschlüsse zu jeweils der äußeren Seite zusammengeführt und an einen gemeinsamen Anschluß des Schaltfeldes 1 gelegt.

Man erkennt weiterhin in einer stark schematisierten Darstellung ein bewegliches Kontaktstück 4, das hier einem elektrostatisch verbiegbaren bzw. auslenkbaren Balken entspricht. Wesentlich bei der erfindungsgemäßen Schalteinrichtung ist, daß all diese bewegbaren Kontaktstücke 4 synchron arbeiten, d. h. von einem einzigen gemeinsamen Signal geöffnet und geschlossen werden, insoweit wie Teile eines gemeinsam aufgebauten einheitlichen Schalters wirken.

Jede einzelne Mikrorelaiszelle 3 kann eine Spannung von etwa 24 V unterbrechen, so daß sich für das Schalffeld 1 eine abschaltbare Spannung von 400 V ergibt. Dies ist ein für viele Anwendungen günstiger Wert, bevorzugt sind insbesondere Werte über 200 bzw. 300 V.

Der schaltbare Laststrom für jede Mikrorelaiszelle 3 beträgt etwa 200 mA und ergibt damit einen Gesamtstrom von 9 A für das Schaltfeld 1.

Diese Werte sind so gewählt, daß sie sich direkt mit einem konventionellen Standardschütz (z. B. A9-Schütz (ABB Control, Frankreich)) vergleichen lassen. Dieses elektromagnetische Standardrelais mit 400 V trennbarer Spannung und 9 A schaltbarem Laststrom verbraucht eine Aktivierungsleistung von 2 W. Demgegenüber ergibt sich für das gesamte Schaltfeld 1 der erfindungsgemäßen Schalteinrichtung eine Aktivierungsleistung von nur 5 mW, die um mehr als einen Faktor 500 kleiner ist. Bei der gegenwärticen Technologie liegen die Verlustleistungen im leitenden Zustand bei dem konventionellen Relais noch etwas niedriger (0,1 W) als für das erfindungsgemäßen Schaltfeld 1 mit 0,6-6 W. Dieser Wert läßt sich jedoch durch eine weitere Verbesserung der Kontakte und eventuell durch eine Erhöhung der Schließkraft der Mikrorelais wesentlich senken. Insbesondere in Anbetracht der außerordentlich niedrigen Aktivierungsleistung besteht bei der Schließkraft erkennbar Spielraum.

Beim Vergleich dieser Werte ist zu beachten, daß konventionelle Schütze leistungslos ausgeschaltet sind, d. h. im eingeschalteten Zustand die genannte Aktivierungsleistung verbrauchen. Daher verbraucht beispielsweise das Schütz A9 im eingeschalteten Zustand etwa 2,1 W und somit ein Vielfaches des mit der Erfindung erzielbaren Wertes.

Figur 2 zeigt einen der erfindungsgemäßen Schalteinrichtung entsprechenden Si-Chip 6 mit dem bereits anhand Figur 1 beschriebenen Schaltfeld 1. Zusätzlich ist unterhalb einer äußersten (in der Figur untersten) Stufe 2 des Schaltfeldes 1 ein Hallsensor 5 vorgesehen. Es handelt sich dabei um einen auf dem Si-Chip 6 integrierten Hallsensor in einer für radiale Magnetfelder, wie sie bei linienförmigen Stromleitern auftreten, geeigneten Konfiguration. Hierzu wird verwiesen auf die bereits zitierte Veröffentlichung "Cylindrical Hall Device".

Über eine Anschlußleitung wird dieser Hallsensor 5 gesteuert von einer Steuereinrichtung 7, die das Ausgangssignal des Hallsensors 5 auswertet und an den Hallsensor 5 den entsprechenden Strom anlegt. Diese Steuereinrichtung 7 steuert weiterhin das Schaltfeld 1, d. h. schaltet zwischen dem leitenden und offenen Zustand des Schaltfeldes 1 um. Dabei werden alle beweglichen Kontaktstücke 4 der einzelnen Mikrorelaiszellen 3 gleichzeitig geöffnet bzw. gleichzeitig geschlossen.

Diese Steuereinrichtung 7 kann ferner bei Bedarf eine Zeitgeberschaltung 8 enthalten, die hier nicht gesondert eingezeichnet ist.

Insgesamt läßt sich durch die Erfindung auf dem Siliziumchip 6 die Funktion eines konventionellen. Schützes mit Ansteuerelektronik und Stromsensor verwirklichen. Dabei ergibt sich ein Bauvolumen von größenordnungsmäßig (30 x 50 x 1)mm³ bei einem. Gewicht von etwa 10 g gegenüber vergleichbaren Werten bei dem bereits erwähnten konventionellen elektromagnetischen Schütz A9 von (44 x 74 x 74) mm³ und 340 g.

## Patentansprüche

1. Elektrische Schalteinrichtung für Leistungsanwendungen mit einer Strombelastbarkeit von zumindest 1 A und mit einer Spannungsbelastbarkeit von zumindest 100 V mit zwei Stromanschlüssen und einem zwischen die beiden Stromanschlüsse geschalteten Schaltfeld, enthaltend eine erste Anzahl von parallel geführten Strompfaden mit jeweils einer zweiten Anzahl von in Serie geschalteten Mikrorelaiszellen (3), **dadurch gekennzeichnet, dass** die Mikrorelaiszellen (3) unter Bildung von spannungs- und stromteilend wirkenden Stufen (2) derart miteinander elektrisch verbunden sind, dass die Mikrorelaiszellen (3) einer Stufe vor dem Anschluß an die nächste Stufe elektrisch zusammengeführt sind.

2. Schalteinrichtung nach Anspruch 1, **dadurch gekennzeichnet, dass** die Mikrorelais auf einem Chip (6) integriert sind.

3. Schalteinrichtung nach Anspruch 2 mit einem Stromsensor (5) und einer Ansprechüberwachungseinrichtung (7), **dadurch gekennzeichnet, dass** der Stromsensor (5), die Ansprechüberwachungseinrichtung (7) und/oder eine Zeitgeberschaltung (8) auf dem Chip (6) integriert sind.

4. Schalteinrichtung nach Anspruch 3, **dadurch gekennzeichnet, dass** der Stromsensor (5) ein Hallsensor ist.

## Claims

1. Electrical switching device for power applications having a current load capacity of at least 1 A and having a voltage load capacity of at least 100 V with two electrical connections and one switch panel connected between the two electrical connections, containing a first number of parallel current paths each having a second number of series-connected microrelay cells (3), **characterized in that** the microrelay cells (3) are electrically connected to one another forming stages (2) having a voltage-dividing and current-dividing effect, such that the microrelay cells (3) of one stage are electrically joined together before the connection to the next stage.

2. Switching device according to Claim 1, **characterized in that** the microrelays are integrated on a chip (6).

3. Switching device according to Claim 2 having a current sensor (5) and a response monitoring device (7), **characterized in that** the current sensor (5), the response monitoring device (7) and/or a timer circuit (8) are/is integrated on the chip (6).

4. Switching device according to Claim 3, **characterized in that** the current sensor (5) is a Hall sensor.

## Revendications

1. Dispositif de commutation électrique pour les applications de puissance ayant une capacité de charge minimale en courant de 1 A et une capacité de charge minimale en tension de 100 V, muni de deux bornes électriques et d'un panneau de connexion branché entre les deux bornes électriques, contenant un premier nombre de chemins de courant qui s'étendent en parallèle avec à chaque fois un deuxième nombre de cellules à micro-relais (3) branchées en série, **caractérisé en ce que** les cellules à micro-relais (3) sont reliées électriquement entre elles en formant des étages (2) actifs diviseurs de tension et de courant de manière à ce que les cellules à micro-relais (3) d'un étage sont regroupées électriquement avant le raccordement à l'étage suivant.

2. Dispositif de commutation selon la revendication 1, **caractérisé en ce que** les cellules à micro-relais sont intégrées sur une puce (6).

3. Dispositif de commutation selon la revendication 2 comprenant un capteur de courant (5) et un dispositif de contrôle du déclenchement (7), **caractérisé en ce que** le capteur de courant (5), le dispositif de contrôle du déclenchement (7) et/ou un circuit de base de temps (8) sont intégrés sur la puce (6).

4. Dispositif de commutation selon la revendication 3, **caractérisé en ce que** le capteur de courant (5) est un capteur à effet Hall.
